# EUROPEAN PATENT SPECIFICATION

(11) **EP 1 511 622 B1**
(45) Date of publication and mention of the grant of the patent: **27.08.2008**
(21) Application number: 03755941.6
(22) Date of filing: 22.05.2003
(51) Int. Cl.: B32B 13/06, B32B 13/02, B32B 15/16, F41H 5/04, E04C 2/06, E04C 2/28, E04C 2/36, E04H 9/10, C04B 28/02

(54) **REINFORCED COMPOSITE PANEL**
VERSTÄRKTE VERBUNDPLATTE
PANNEAU COMPOSITE RENFORCE

(30) Priority: 31.05.2002 GB 0212687
(43) Date of publication of application: 09.03.2005
(73) Proprietor: Composhield A/S, 8520 Lystrup (DK)
(72) Inventor: SIMMONSEN, John, DK-9500 Hobro (DK); YDE NIELSEN, Michael, DK-9870 Sindal (DK); UDENGAARD, Brian, DK-9220 Aalborg Ost (DK); ELKJAER, Andreas, DK-9500 Hobro (DK); RIISGAARD, Benjamin, DK-2300 Copenhagen S (DK); BONDE, Hans, Soeren, 9500 Hobro (DK)
(74) Representative: Walls, Alan James
(86) International application number: PCT/EP2003/005455
(87) International publication number: WO 2003/101727

(56) References cited:
- WO-A-98/21029
- US-A- 4 515 861
- US-A- 4 588 443
- US-A- 5 234 754

## Description

This invention relates to reinforced composite panels, useful as barrier elements for shielding structures, equipment and personnel from blast and/or ballistic impact damage.

There is a need for blast and/or ballistic (i.e. projectile) impact resistant barrier structures for use in battle zones or in locations near explosive hazard sites, to shield and protect buildings, accommodation units, equipment, personnel and other vulnerable entities. It would be convenient if such barrier structures could be assembled from one or more prefabricated or on-site constructed panels, supported and interconnected in an appropriate fashion using panel support elements and/or interconnection elements for interconnecting adjacent panels or for connecting panels to structural elements of a building, container or other entity which it is intended to shield. It is an object of this invention to provide a panel for such use.

International Patent Application No. WO 98/21029 relates to a composite laminate panel suitable for building containment vessels such as double hull oil tankers, which has two facing metal layers structurally bonded to a polyurethane elastomer core.

According to the invention, there is provided a composite panel having front and back faces, the panel comprising facing reinforcement, backing reinforcement and cementitious matrix material binding to the facing and backing reinforcements, the facing and backing reinforcements each independently comprising one or more reinforcing sheets, the facing reinforcement being located on or embedded in cementitious matrix material adjacent to the front face of the panel, the backing reinforcement being located in a plane or planes substantially parallel to the plane or planes of the facing reinforcement, and being substantially coextensive therewith, and spaced therefrom by cementitious matrix material, the facing and backing reinforcements being interconnected to resist out-of-plane relative movement. The unqualified term "matrix material" used in the following description means "cementitious matrix material".

Inherent in the fact that reinforcing sheets present in facing or backing reinforcement are in sheet format is the requirement that they conform to a flat or curved surface. Hence, the requirement that the backing reinforcement is located in a plane or planes substantially parallel to the plane or planes of the facing reinforcement is to be interpreted as meaning that the surfaces associated with the facing and backing reinforcements are matching and complementary, and that the gap between the two surfaces is generally uniform. The requirement that the backing reinforcement be substantially coextensive with the facing reinforcement may be expressed equivalently by the requirement that the reinforcements have generally the same overall area, and the overall shapes defined by their perimeters are generally the same.

The overall shape of the panel will be determined by end use requirements. Often panels of the invention will be generally flat, with generally uniform thickness. For more specialised end use requirements, a panel may be shaped with a radius or radii of curvature, or may be formed in two or more intersecting planes. Whatever its overall shape, the fact that it is a panel implies that its thickness will be smaller than its other dimensions, e.g. its length and width, and it will have two faces separated by its thickness. For the purposes of constructing the panel, the front face is that which will face the direction from which blast or ballistic impact is expected, and the other is the back face.

Likewise, the overall dimensions of the panels of the invention will be determined by end-use requirements, such as the impact conditions which they are required to resist, and the size and/or area of the object which the panel or an assembly of the panels is required to protect. In many cases, the dimensions of a rectangular panel of the invention may be, for example, in the following ranges: thickness 10 to 500 mm, length 0.5 to 50 meters, width 0.5 to 30 meters.

Facing reinforcement may be located on the front face of the panel, or wholly or partially embedded in matrix material adjacent the front face of the panel. For present purposes, reinforcement is deemed adjacent the front face of the panel if it is located closer to the front face than to the back face of the panel. In one embodiment, facing reinforcement is located on the matrix material of the front face of the panel and adheres thereto. In another embodiment, facing reinforcement is at least partially embedded in the matrix material of the front face of the panel. In yet another embodiment, the facing reinforcement has at least two layers, at least one of which is wholly embedded in matrix material, and another is bound to the front face of the panel by matrix material or is itself wholly or partially embedded in matrix material. Facing reinforcement may advantageously be located on or embedded in matrix material formulated to be harder than matrix material present elsewhere in the panel.

For present purposes, reinforcement is considered backing reinforcement if it is closer to the back face of the panel than to the front face of the panel, or if it is located on the median plane or surface between the two panel faces. In one embodiment, backing reinforcement is located on, and is bound by matrix material to, the back face of the panel. In another embodiment, backing reinforcement is at least partially embedded in the matrix material of the back face of the panel. In yet another embodiment, the backing reinforcement has at least two layers, at least one of which is wholly embedded in matrix material, and another is bound to the back face of the panel by matrix material or is itself wholly or partially embedded in matrix material. Backing reinforcement may advantageously be located on or embedded in matrix material formulated to be more ductile than matrix material present elsewhere in the panel.

Facing and backing reinforcements may comprise perforated or unperforated sheet material (for example of metal such as steel, or fibre reinforced resin such as glass or carbon fibre reinforced resin)

The panels of the invention are sandwich structures wherein a matrix material is sandwiched between the facing and backing reinforcements. As is discussed below, where the facing and/or backing reinforcements themselves comprise layers of sheet reinforcements, matrix material may also be sandwiched between such layers, although the thicknesses of such inter-layer matrix material will generally be small compared to the thickness of the matrix layers between the facing and backing reinforcements. The volume fraction of facing and backing reinforcement in panels of the invention may typically lie in the range from 20 to 60%. Often the facing and/or backing reinforcements may comprise steel sheet materials or steel rods, and in such cases typically steel with a yield strength in the range 1000 to 2500 MPa may be used.

The facing reinforcement may have one or a plurality, for example two or three layers of reinforcement, each layer being independently a perforated or unperforated sheet material. At least the layer of facing reinforcement nearest the front face of the panel may be of hard materials such as ceramic or hardened steel e.g. that available under the trade names Hardox 600 or Armox 600, or of softer materials such as a high strength steel with a hard coating such as a chromium surface of thickness about 20 to 500 µm. Individual layers of the facing reinforcement may be separated by a matrix-filled gap, such filled gap providing so-called "soft impact" effects. Alternatively, individual layers of the facing reinforcement may abut each other, providing so-called "hard impact" effects. At least the layer of facing reinforcement nearest the front face of the panel may be embedded or partially embedded in a hard particle-reinforced matrix which is harder than elsewhere in the panel. In addition, the rods or sheet materials of the facing reinforcement may be pre-stressed.

The backing reinforcement also may have one or a plurality, for example two or three, layers of reinforcement, each layer being independently a perforated or unperforated sheet material. Individual layers of the backing reinforcement may also be separated by a matrix-filled gap. The sheet materials of the backing reinforcement may also be pre-stressed. The backing reinforcement, or any of the reinforcement layers comprising the backing reinforcement, may be of lightweight materials such as fibre reinforced resin materials.

Facing or backing reinforcement may include at least two types of material; for example, one type of sheet material may be lighter than the other. Thus, the heavier material may be metallic such as steel or high strength, high ductility metal matrix composite, and the lighter material may be resinous, such as carbon or glass fibre reinforced resin.

Whatever their structures the facing and backing reinforcements are interconnected to resist out-of-plane relative movement. This may be done using interconnecting bolts, welded or glued interconnecting short rods or studs, or by wire or cable ties between the facing and backing reinforcements. Where the facing and/or backing reinforcements are made up of two or more layers of sheets and/or rods, as described above, it is preferred that all layers of the respective facing or backing reinforcements are also interconnected.

The facing or backing reinforcement sheets may also be anchored in the matrix material by means of keying elements such as studs formed on or fixed to their faces which are in contact with the matrix material.

To reduce splintering or fragmentation under impact, it is usually preferred that there should be no substantial layer of matrix material exposed on the front or back face of the panel.

In the panels of the invention, the facing and backing reinforcements are spaced from each other by matrix material. In some cases that spacing may be sufficiently wide to accommodate panel support elements, such as rods or beams, arranged between the front and back reinforcement. Such support elements may project beyond the perimeter of the panel to provide means for connection of two or more panels in the assembly of a protective structure.

The matrix material of the panel is cementitious. An example is the DSP ("Densified systems containing ultrafine Particles") matrix materials disclosed, e.g., in US Patents Nos. 5,234,754 and 4,588,443 which may be based on dense packing of cement particles with ultrafine particles, for example silica fume particles, in interstices between the cement particles. A preferred matrix, is made from a mix containing cement particles, ultrafine microsilica particles of a size which is typically about 1/100 of the size of the cement particles, water in a low amount relative to the cement plus microsilica, a concrete superplasticizer as dispersing agent, and silica or carborundum sand, often with added steel fibres. Typically, DSP matrices may have compressive strength in the range 200 to 400 MPa, tensile strength in the range 10 to 50 MPa, modulus of elasticity in the range 30 GPa to 100 GPa, and fracture energy in the range 1 KN/m to 100 KN/m.

Preferably the matrix material in the panels of the invention is a DSP material, in which the microfine binder particles are of silica or fly ash, and which includes metal fibres, preferably a high loading of steel fibres such as from 14-17% by dry mix volume. Stone aggregate and sand may also be present in cementitious DSP matrix materials.

Panels of the invention may be fabricated by casting hardenable matrix material between or around the facing and backing reinforcements and their interconnectors and/or anchors. Alternatively, matrix material may be cast against either the backing or facing reinforcement, and the facing or backing reinforcement may be applied to the cast matrix mass, with interconnectors or anchors being installed by immersion in the matrix material while unhardened, or installed in bores or other suitably shaped cavities formed in the matrix material while unhardened or after hardening. Intimate contact between matrix material and the various reinforcement and other components of the panel may be improved by vibration treatment of the cast structure before hardening. Hardening/curing may be assisted by elevated temperatures.

The means of interconnection between reinforcement sheets can be introduced prior to casting the matrix material, or after casting. For example, when the means of interconnection is a series of nut and bolt fasteners, the panel can be drilled to accommodate the fasteners after the cast matrix material has hardened or partially hardened. Alternatively bore-formers sized to accommodate the bolts can be arranged between pre-drilled holes in the reinforcement sheets, and the matrix material cast around the bore-formers as the assembly is built up. The bolts can then be inserted in the bore holes after the matrix material has hardened or partially hardened. Still another possibility is to dispense with bore-formers, and simply cast the matrix material around the interconnection means after complete or partial interconnection of the reinforcement sheets.

When constructing panels by laying down the sheet reinforcement layer by layer, and casting the matrix material onto each successive layer as it is laid down, the assembly can be vibrated as it is cast or after casting but before the matrix material is set, to ensure good contact between the matrix material and the reinforcement, and to reduce the risk of air bubbles in the matrix material. In that latter connection, it is often desirable to include in the panel construction a liner layer of a material which is permeable to air, such as a fibrous matting, for example felt. During vibration of the panel assembly air is then vibrated from the matrix material into the permeable layer, from which it can be expressed as the reinforcements are interconnected.

When a panel of the invention suffers blast and/or ballistic impact the arrangement of facing and backing reinforcement bound by matrix material resists and absorbs impact force, assisted by the matrix. The impact force causes substantial tensile stresses at the back of the panel. Under such tension, matrix material exposed on the back face, or exposed there by rupture of the backing reinforcement, will tend to splinter and fragment, a process also known as spalling, and there may be a risk of flying fragments behaving like shrapnel and causing damage to the structures, equipment, personnel or other entities shielded by the panel. Preferably, therefore, especially in cases where the backing reinforcement itself does not form the back face of the panel, the back face is adapted to resist spalling when the front face of the panel is subjected to impact force. Such adaptation might take the form of a more ductile (i.e. more spalling-resistant) layer of matrix material on the back face of the panel than in the panel interior. The ductility of the surface layer might be achieved by incorporating a large amount of long fibres. Alternatively, spalling resistance might be provided by a flexible fragment-containment layer covering the back face of the panel. For example a layer of fibre reinforced epoxy resin may be formed on the back face of the panel. Alternatively, a flexible sheet of, for example, synthetic rubber might be fixed or laminated to the back face of the panel.

Similarly, when the front face of the panel suffers blast or ballistic impact force, any matrix material exposed on the face may also tend to splinter and throw off fragments which might damage equipment or personnel within range. Such splintering and fragmentation of the front face (often called scabbing) can be minimised by increased ductility of the matrix material adjacent the front face, and/or by fixing a fragment-containment layer to cover the front face of the panel, as discussed above in the case of the back face.

In one preferred embodiment of the invention the panel comprises a single plate facing reinforcement, and a single plate backing reinforcement, with matrix material sandwiched therebetween, the facing and backing reinforcement being interconnected through the matrix material by a plurality of bracing elements. Preferably the facing and backing reinforcements are steel plates, for example of military armour grade, such as Hardox 600 or Armox 600.

The bracing elements are preferably nut and bolt fasteners, the bolts passing through the facing and backing reinforcement, the matrix material between them, and the air-permeable liner layer mentioned above, if present, the bolts being threaded to accommodate a backing nut threaded thereon and abutting the external face of the backing reinforcement and a facing nut threaded thereon and abutting the external face of the facing reinforcement.

Alternatively, the bracing elements may be nut and bolt fasteners, the bolts passing through the facing and backing reinforcement, the matrix material between them, and the air-permeable liner layer if present, the bolts having a head abutting the external face of the backing reinforcement, and being threaded to accommodate a facing nut threaded thereon and abutting the external face of the facing reinforcement.

Where the bracing elements are nut and bolt fasteners of either type described in the two preceding paragraphs, it is preferred that bolts are also threaded to accommodate a spacer nut abutting the internal faces of the facing and backing reinforcement. That spacer nut also serves to strengthen the bolt against breakage if a projectile scores a direct hit on the end of the bolt projecting from the face of the panel. In such an eventuality, it is also desirable that the end of the bolt projecting from the external face of the facing reinforcement is conical, for example pointed, to cause deflection of the projectile striking it.

As stated above, it is often desirable for panels of the invention to have a flexible fragment-containment layer, ie a spall liner, covering the back face, to prevent shrapnel fragments flying off that face when an impact occurs on the front face. A particular risk may arise when bolts are used for interconnection of the reinforcement sheets. If one of the bolts projecting from the front face is directly hit by a projectile, it could be punched through the panel and fly out the rear face causing injury or destruction. While a spall liner may minimise that risk, the comparatively small cross sectional area of the bolt might mean the force of the punched-out bolt on the spall liner may be too great, and it might be penetrated by the bolt. This risk can be minimised by increasing the cross sectional area of the ends of the bolts projecting from the external face of the backing reinforcement by attaching plates thereto, for example by welding to the end of the bolt, or by threading a washer on the end of the bolt. This spreads the impact force of a punched-out bolt over a larger area and reduces the risk of penetration of the spall liner.

The invention will now be further illustrated by reference to the accompanying drawings, wherein
Figs 1A and 1B show (diagrammatically) possible arrangements of facing and backing reinforcement in longitudinal cross sections of panels of the invention;
Fig 2 shows (diagrammatically) a cross-sectional view of a preferred panel of the invention.

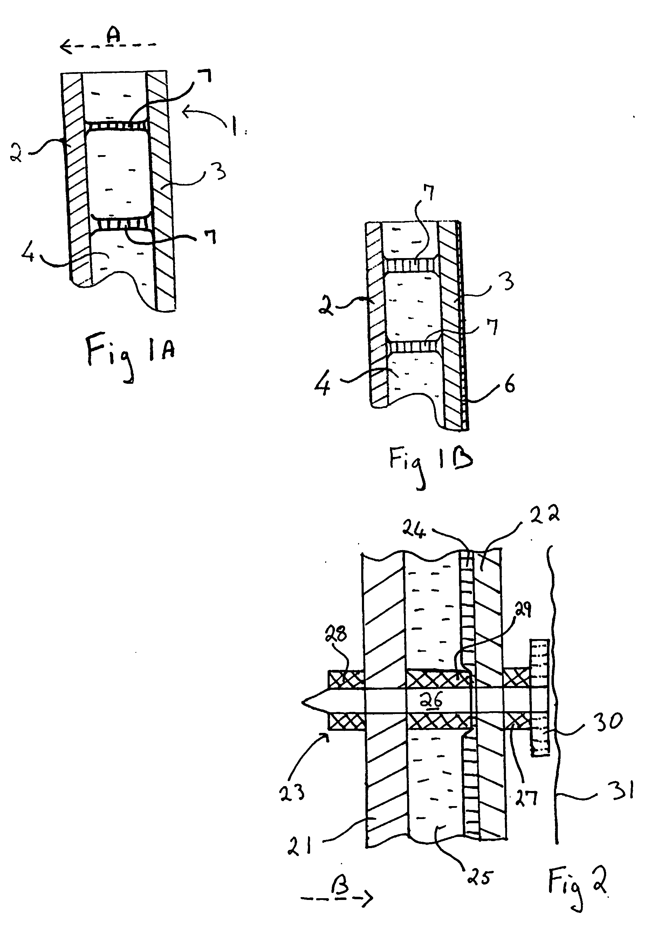

In Fig 1A, a rectangular panel 1 of the invention is shown truncated lengthwise, with a front face facing to the left as indicated by the arrow A, with facing sheet reinforcement 2 and backing sheet reinforcement 3 located in or on matrix material 4. Backing reinforcement 3 is substantially coextensive with and spaced at substantially constant distance from facing reinforcement 2 in that the two define the length and width of the panel. Backing reinforcement 3 is spaced from facing reinforcement 2 by matrix material 4 in that matrix material fills the gap between the two. In a preferred embodiment, the matrix material 4 is a cement-based DSP material reinforced with steel fibres as described above.

Facing reinforcement 2 and backing reinforcement 3 could be, for example one, two or three layers, each of which is independently a perforated or unperforated sheet material, for example steel. Usually at least the outermost layer of both facing and backing reinforcement will be unperforated sheet.

Where facing reinforcement 2 or backing reinforcement 3 consists of two or three layers, it is embedded in the matrix material of the front face of the panel, with the outermost layer adhered to or partially embedded in matrix material so that the matrix cover at the panel face is reduced to a minimum. The individual reinforcing layers are spaced by a thin (e.g. 2 mm) layer of matrix to soften impact on the panel. Where the facing reinforcement consists of a single layer, it is adhered to or partially or minimally embedded in matrix material so that the matrix cover at the panel face is reduced to a minimum. The matrix in which the reinforcement is embedded or to which it is adhered may be made to harder specification than the matrix between the facing and backing reinforcement. Also, a hard coating may be applied to the facing reinforcement or to the leftmost layer which experiences the first impact. Where reinforcement is adhered to the surface of a face of the panel, keying elements such as studs may be provided on the contact side of the reinforcement, these keying elements then becoming embedded in the matrix material and improving binding to the reinforcement. Where potential scabbing of the front or back face of the panel is a concern, the matrix in which the facing reinforcement is embedded or to which it is adhered may be made to a more ductile specification than the matrix between the facing and backing reinforcement; and/or a separate spall (scab) liner (i.e. a flexible fragment-containment layer, for example a resinous or rubbery layer) located on the face of the panel may be desirable.

In Fig 1A facing reinforcement 2 and backing reinforcement 3 are interconnected by bracing elements 7, which may be, for example rods, studs, spacer blocks, or honeycomb spacer fillets which are welded or glued to the reinforcement with which they are in contact, or nut and bolt fasteners which may pass through facing and backing reinforcement. Where the facing and/or backing reinforcement consists of two or more layers, those layers are preferably also interconnected. In this way, relative out of plane movement of the facing and backing reinforcement is resisted when the front face of the panel suffers impact. Forces are transferred from the facing reinforcement through the interconnections to the backing reinforcement, and the composite of facing and backing reinforcement tends to deform as a unit, resisting delamination of the reinforcement sheets. The same principle of interconnecting the facing and backing reinforcement applies irrespective of the structure of the reinforcements and irrespective of the mode of interconnection (whether bolts, welded or glued rods or studs, spacer blocks, honeycomb spacer fillets, or other structures).

In Fig 1B, the rearward part of the panel of Fig 1A is shown, again with backing reinforcement 3 as discussed in relation to Fig 1A and matrix material 4. A flexible fragment containment membrane 6 is adhered to the back face of the panel to contain any splinters of fragments which might fly from the back face when the front face of the panel is impacted. The membrane 6 may be, for example, a rubbery sheet adhered to the matrix material by a bonding agent, or, if backing reinforcement is exposed on the back face of the panel, it may be tied or otherwise anchored to the reinforcement. Alternatively, membrane 6 may be a layer of fibre-reinforced resin. Such a layer may be sprayed directly onto the back face of the panel, or during panel fabrication the matrix material of the panel may be cast against the resin layer, either directly or via an intermediate layer of bonding aid such as a fibrous mat.

Referring now to Fig. 2, a fragment of a panel of the invention is shown in diagrammatic cross section. The panel is designed for anticipated impact in the direction of arrow B. A facing reinforcement sheet 21 and a backing reinforcement sheet 22 are interconnected by a bracing element generally indicated by arrow 23. A liner 24 of material which is air permeable is located adjacent the internal face of the backing reinforcement 22. Matrix material 25 is sandwiched between the facing and backing reinforcement.

The bracing element consists of a bolt 26, a backing nut 27, a facing nut 28 and a spacer nut 29. The bolt 26 passes through the backing reinforcement, liner 24, matrix material, and facing reinforcement ending in a conically pointed tip protruding from the front face of the panel. The bolt is threaded along its entire length (apart from the conical tip). The backing nut 27 is threaded on the bolt on the back face of the panel to abut the external face of the backing reinforcement; the facing nut 28 is threaded on the bolt on the front face of the panel to abut the external face of the facing reinforcement; and the spacer nut is threaded on the bolt between facing an backing reinforcements to abut the internal face of the facing reinforcement and the internal face of the backing reinforcement, compressing the liner material 24 in doing so.

The facing and backing reinforcements are steel plates, preferably hardened steel such as Hardox 600 or Armox 600. The thickness of these plates is a matter of choice based on the required performance characteristics of the panel, but the facing plate may be, for example, 5 mm thick and the backing plate may be, for example, 3 mm thick. The spacing between the internal faces of the facing and backing plates is also a matter of choice, and will take into account the performance characteristics of the matrix material. However at typical thickness will usually be in the range 7-12 mm, for example 8-9 mm.

It is assumed the order of panel assembly is to lay down the thicker and heavier facing plate, then to cast the matrix material against it, then to apply the air permeable liner material, such as a sheet of felt, for example about 1-2 mm thick, then to place the backing plate on top and vibrate the assembly prior to curing. The function of the liner material 24 is to allow permeation of air rising up through the matrix material during vibration of the panel assembly after the matrix material is cast. From there air is led to and expelled from the edges of the panel, thereby avoiding formation of large air bubbles between the backing plate and the matrix material, which could constitute weak spots, degrading the panel's performance under impact. It will be appreciated that the air permeable liner could be adjacent the facing plate if the order of assembly were reversed.

The end of the bolt 26 protrudes a little beyond the backing nut 27 on the rear face of the panel, and a washer 30 is threaded onto it to abut the backing nut. A spall liner 31 of rubber or reinforced plastics sheeting is fixed by means not shown to cover the back face of the panel. If the bolt 26 takes a direct hit from a projectile on the front face of the panel, the conical tip will tend to deflect that impact and reduce the possibility of the bolt being punched out of the panel through the back face. However, if that happens, the punched out bolt will strike and may be trapped by the spall liner 31. The washer increases the cross-sectional area of the bolt and increases the likelihood that it will not penetrate the spall liner to cause injury or damage.

It will be understood that Fig 2 shows only a fragment of the panel. The full panel has a plurality of spaced apart bolt/nut bracing elements to interconnect the backing and facing reinforcement plates. That spacing will be selected according to the desired performance characteristics of the panel. Spacing of from 100-200 mm, for example about 150 mm may be appropriate in many cases.

## Claims

1. A composite panel having front and back faces, the panel comprising facing reinforcement, backing reinforcement and cementitious matrix material binding to the facing and backing reinforcements, the facing and backing reinforcements each independently comprising one or more reinforcing sheets, the facing reinforcement being located on or embedded in cementitious matrix material adjacent to the front face of the panel, the backing reinforcement being located in a plane or planes substantially parallel to the plane or planes of the facing reinforcement, and being substantially coextensive therewith, and spaced therefrom by cementitious matrix material, the facing and backing reinforcements being interconnected to resist out-of-plane relative movement.

2. A panel as claimed in claim 1 comprising a single plate as facing reinforcement, and a single plate as backing reinforcement, with cementitious matrix material sandwiched therebetween, the facing and backing reinforcement being interconnected through the cementitious matrix material by a plurality of bracing elements.

3. A panel as claimed in claim 2 wherein the facing and backing reinforcements are steel plates.

4. A panel as claimed in claim 2 or claim 3 in which a liner layer is sandwiched between the cementitious matrix material and the internal face of the backing or facing reinforcement, the liner layer being of a material which prior to incorporation into the panel is permeable to air.

5. A panel as claimed in any of claims 2 to 4 in which the bracing elements are nut and bolt fasteners, the bolts passing through the facing and backing reinforcement, the cementitious matrix material between them, and the liner layer if present, the bolts being threaded, with a backing nut threaded thereon abutting the external face of the backing reinforcement and a facing nut threaded thereon abutting the external face of the facing reinforcement.

6. A panel as claimed in any of claims 2 to 4 wherein the bracing elements are nut and bolt fasteners, the bolts passing through the facing and backing reinforcement, the cementitious matrix material between them, and the liner layer if present, the bolts having a head abutting the external face of the backing reinforcement, and being threaded with a facing nut threaded thereon abutting the external face of the facing reinforcement.

7. A panel as claimed in claim 5 or claim 6 wherein the bolts are threaded, - with a spacer nut threaded thereon abutting the internal faces of the facing and backing reinforcement.

8. A panel as claimed in any of claims 5 to 7 wherein the end of the bolt projecting from the external face of the facing reinforcement is conical.

9. A panel as claimed in any of claims 5 to 8 wherein the cross sectional area of the ends of the bolts projecting from the external face of the backing reinforcement is increased by plates fixed thereto.

10. A panel as claimed in any of the preceding claims wherein a flexible fragment-containment layer covers the back face of the panel.

11. A panel as claimed in any of claims 1 to 10 wherein the cementitious matrix material includes metal fibres.

12. A panel as claimed in claim 11 wherein the cementitious matrix material is a DSP material.

13. A panel as claimed in any of the preceding claims wherein panel support elements are incorporated in the cementitious matrix between facing and backing reinforcement to facilitate support of the panel in a structure including the panel.

## Patentansprüche

1. Verbundplatte mit Vorder- und Rückenflächen, wobei die Platte eine Außenschichtverstärkung, eine Unterschichtverstärkung und ein zementartiges Matrixmaterial umfasst, welches an die Außenschicht- und Unterschichtverstärkungen bindet, wobei die Außenschicht- und Unterschichtverstärkungen jeweils unabhängig eine oder mehrere Verstärkungsplatten umfassen, wobei die Außenschichtverstärkung an oder eingebettet in zementartigem an die Vorderfläche der Platte angrenzendem Matrixmaterial angeordnet ist, wobei die Unterschichtverstärkung in einer oder mehreren im Wesentlichen zu der Ebene oder den Ebenen der Außenschichtverstärkung parallelen Ebene oder Ebenen angeordnet und im Wesentlichen koextensiv damit ist und davon durch zementartiges Matrixmaterial beabstandet ist, wobei die Außenschicht- und Unterschichtverstärkungen miteinander verbunden sind, um einer relativen Bewegung aus der Ebene heraus zu widerstehen.

2. Platte nach Anspruch 1, umfassend eine einzelne Platte als Außenschichtverstärkung und eine einzelne Platte als Unterschichtverstärkung mit dazwischen eingebrachtem zementartigem Matrixmaterial, wobei die Außenschicht- und Unterschichtverstärkung durch das zementartige Matrixmaterial mittels einer Vielzahl von Klammerelementen miteinander verbunden sind.

3. Platte nach Anspruch 2, wobei die Außenschicht- und Unterschichtverstärkungen Stahlplatten sind.

4. Platte nach Anspruch 2 oder 3, in der eine Auskleidungslage zwischen dem zementartigen Matrixmaterial und der inneren Fläche der Unterschicht- oder Außenschichtverstärkung eingebracht ist, wobei die Auskleidungslage aus einem Material besteht, welches vor dem Einbringen in die Platte luftdurchlässig ist.

5. Platte nach einem der Ansprüche 2 bis 4, in der die Klammerelemente Mutter- und Bolzen-Befestigungen sind, wobei die Bolzen die Außenschicht- und Unterschichtverstärkung, das zementartige Matrixmaterial dazwischen und, falls vorhanden, die Auskleidungslage durchdringen, wobei die Bolzen mit einem Gewinde mit einer darauf geschraubten Unterschicht-Mutter versehen sind, die an die äußere Fläche der Unterschichtverstärkung anliegt, und einer darauf geschraubten Außenschicht-Mutter, die an die äußere Fläche der Außenschichtverstärkung anliegt.

6. Platte nach einem der Ansprüche 2 bis 4, wobei die Klammerelemente Mutter- und Bolzen-Befestigungen sind, wobei die Bolzen die Außenschicht- und Unterschichtverstärkung, das zementartige Matrixmaterial dazwischen und, falls vorhanden, die Auskleidungslage durchdringen, wobei die Bolzen einen Kopf aufweisen, der an die äußere Fläche der Unterschichtverstärkung anliegt, und mit einem Gewinde versehen sind, auf das eine Außenschicht-Mutter geschraubt ist, die an die äußere Fläche der Außenschichtverstärkung anliegt.

7. Platte nach Anspruch 5 oder 6, wobei die Bolzen mit einem Gewinde mit einer darauf geschraubten Abstandsmutter versehen sind, die an die inneren Flächen der Außenschicht-und Unterschichtverstärkung anliegt.

8. Platte nach einem der Ansprüche 5 bis 7, wobei das Ende des Bolzens, das von der äußeren Fläche der Außenschichtverstärkung absteht, konisch ist.

9. Platte nach einem der Ansprüche 5 bis 8, wobei die Querschnittsfläche der Enden der Bolzen, die von der äußeren Fläche der Unterschichtverstärkung abstehen, durch daran befestigte Platten vergrößert ist.

10. Platte nach einem der vorhergehenden Ansprüche, wobei eine flexible Bruchstück-Eingrenzungslage die Rückenfläche der Platte bedeckt.

11. Platte nach einem der Ansprüche 1 bis 10, wobei das zementartige Matrixmaterial Metallfasern enthält.

12. Platte nach Anspruch 11, wobei das zementartige Matrixmaterial ein DSP-Material ist.

13. Platte nach einem der vorhergehenden Ansprüche, wobei Plattenhalteelemente in die zementartige Matrix zwischen Außenschicht- und Unterschichtverstärkung eingebracht sind, um ein Halten der Platte in einer die Platte enthaltenden Struktur zu erleichtern.

## Revendications

1. Panneau composite ayant des faces avant et arrière, le panneau comprenant un renfort frontal, un renfort arrière et un matériau de matrice cimentaire adhérant aux renforts frontal et arrière, les renforts frontal et arrière comprenant chacun indépendamment une ou plusieurs feuilles de renforcement, le renfort frontal étant placé sur ou noyé dans le matériau de matrice cimentaire adjacent à la face avant du panneau, le renfort arrière étant situé dans un plan ou des plans sensiblement parallèles au plan ou aux plans du renfort frontal, et étant sensiblement coextensif à celui-ci, et séparé de celui-ci par un matériau de matrice cimentaire, les renforts frontal et arrière étant reliés entre eux de façon à résister à un mouvement relatif hors du plan.

2. Panneau selon la revendication 1, comprenant une seule plaque en tant que renfort frontal et une seule plaque en tant que renfort arrière, le matériau de matrice cimentaire étant placé en sandwich entre elles, le renfort frontal et le renfort arrière étant reliés entre eux, au travers du matériau de matrice cimentaire, par une pluralité d'éléments d'entretoisement.

3. Panneau selon la revendication 2, dans lequel les renforts frontal et arrière sont des plaques en acier.

4. Panneau selon la revendication 2 ou 3, dans lequel une couche de doublure est placée en sandwich entre le matériau de matrice cimentaire et la face interne du renfort frontal ou du renfort arrière, la couche de doublure étant constituée d'un matériau qui, avant incorporation dans le panneau, est perméable à l'air.

5. Panneau selon l'une quelconque des revendications 2 à 4, dans lequel les éléments d'entretoisement sont des fixations à boulons et écrous, les boulons traversant les renforts frontal et arrière, séparés par le matériau de matrice cimentaire, et la couche de doublure éventuelle, les boulons étant filetés, un écrou arrière vissé sur le boulon venant en butée contre la face externe du renfort arrière, et un écrou frontal vissé sur le boulon venant en butée contre la face externe du renfort frontal.

6. Panneau selon l'une quelconque des revendications 2 à 4, dans lequel les éléments d'entretoisement sont des fixations à boulons et écrous, les boulons traversant les renforts frontal et arrière, séparés par le matériau de matrice cimentaire, et la couche de doublure éventuelle, les boulons ayant une tête venant en butée contre la face externe du renfort arrière, et étant filetés, un écrou frontal vissé sur le boulon venant en butée contre la face externe du renfort frontal.

7. Panneau selon la revendication 5 ou 6, dans lequel les boulons sont filetés, un écrou d'écartement vissé dessus venant en butée contre les faces internes du renfort frontal et du renfort arrière.

8. Panneau selon l'une quelconque des revendications 5 à 7, dans lequel l'extrémité du boulon faisant saillie de la face externe du renfort frontal est conique.

9. Panneau selon l'une quelconque des revendications 5 à 8, dans lequel la zone de section transversale des extrémités des boulons faisant saillie de la face externe du renfort arrière est augmentée par des plaques fixées dessus.

10. Panneau selon l'une quelconque des revendications précédentes, dans lequel une couche de confinement de fragments recouvre la face arrière du panneau.

11. Panneau selon l'une quelconque des revendications 1 à 10, dans lequel le matériau de matrice cimentaire comprend des fibres métalliques.

12. Panneau selon la revendication 11, dans lequel le matériau de matrice cimentaire est un matériau DSP.

13. Panneau selon l'une quelconque des revendications précédentes, dans lequel des éléments support de panneaux sont incorporés dans la matrice cimentaire entre le renfort frontal et le renfort arrière pour faciliter le support du panneau dans une structure comprenant le panneau.
